# EUROPEAN PATENT APPLICATION

(11) **EP 4 223 395 A1**
(43) Date of publication of application: **09.08.2023**
(21) Application number: 22155356.3
(22) Date of filing: 07.02.2022
(51) Int. Cl.: B01D 63/08, B01D 63/14, C02F 3/12

(54) **FILTER MODULE, MEMBRANE BIOREACTOR AND USE OF THE FILTER MODULE**

(71) Applicant: MANN+HUMMEL LIFE SCIENCES & ENVIRONMENT HOLDING SINGAPORE PTE. LTD., Singapore 139234 (SG)
(72) Inventor: Fasold, Michael, 71549 Auenwald (DE); Gehwolf, Klaus, 94437 Mamming (DE); Dehnen, Ulrich, 70806 Kornwestheim (DE); Münkel, Karlheinz, 75038 Oberderdingen-Flehingen (DE); Riedinger, Korbinian, 94405 Landau (DE)
(74) Representative: Mann + Hummel Intellectual Property

(57) **Abstract**

The present invention provides a filter module comprising: one or more membrane cartridges, each membrane cartridge comprising a plurality of filter units adapted for use in a membrane bioreactor; and a frame structure providing a receiving space to receive the one or more membrane cartridges. Each filter unit comprises at least one filtration membrane pleated to form alternating crests and valleys, and is arranged in two layers which are sealed to define an enclosed permeate space therebetween, wherein two valleys and a crest, or two crests and a valley, of a layer form permeate channels in the permeate space, the permeate channels having an axis along the channel length, the permeate channels being enclosed at both axial ends of the channels, the enclosed axial ends and the two sealed layers enclosing the permeate space. At least one spacer element is provided on a layer of the filtration membrane, the spacer element extending and contacting at least some of the crests or valleys of the layer, thereby supporting the pleated structure of the layer. There is also provided a membrane bioreactor and a use of the disclosed filter module in a membrane bioreactor.

## Description

### Technical Field

The invention relates to a filter module, in particular for a membrane bioreactor, a membrane bioreactor comprising the filter module and a method of using the filter module in a membrane bioreactor.

### Background Art

Membrane bioreactors are typically used in industrial and municipal wastewater treatment and allow a water purification process with a high degree of purity. A membrane bioreactor (MBR) combines two basic processes - biological degradation and membrane separation - into a single process where wastewater having suspended solids and microorganisms responsible for biodegradation are provided in a tank and the treated water is separated out by a membrane filtration unit.

Such membrane filtration units, also known as membrane cassettes, typically include multiple membranes to increase the surface area for separation. Since industrial and/or municipal wastewater is heavily loaded with particulate and chemical contaminants, fouling of the surface of the membranes occurs overtime, increasing the pressure drop and reducing the flow rate, which is undesirable. Thus, improving the efficiency of the membrane cassette is imperative.

There is a known solution that provides molded membrane sheets to precisely control the active surface. Other known solutions are directed to improving the membrane material, for example to improve the strength of the membrane or to reduce fouling of the membrane. However, it is an ongoing challenge to increase the active surface of the membrane in order to decrease the overall cassette footprint, maintaining mechanical strength, while at the same time, ensuring the membrane cassette is able to remove the treated water effectively.

Therefore, there is a need to provide an improved membrane and membrane cassette that overcome, or at least ameliorate, the problem(s) described above and other disadvantages.

### Summary

In an aspect, there is provided a filter module comprising: one or more membrane cartridges, each membrane cartridge comprising a plurality of filter units; and a frame structure providing a receiving space to receive the one or more membrane cartridges. Each filter unit comprises at least one filtration membrane adapted for use in a membrane bioreactor, the at least one filtration membrane being a microfiltration membrane, ultrafiltration membrane or nanofiltration membrane. The at least one filtration membrane is pleated to form alternating crests and valleys, and is arranged in two layers which are sealed to define an enclosed permeate space there between, wherein two valleys and a crest, or two crests and a valley, of a layer form permeate channels in the permeate space, the permeate channels having an axis along the channel length, the permeate channels being enclosed at both axial ends of the channels, the enclosed axial ends and the two sealed layers enclosing the permeate space. At least one spacer element is provided on a layer of the filtration membrane, the spacer element extending and contacting at least some of the crests or valleys of the layer, thereby supporting the pleated structure of the layer.

The enclosed axial ends of the permeate channels and the two sealed layers provide an enclosed permeate space that is advantageously sealed off from the environment. The environment around the filter unit and filter module, when used in a membrane bioreactor, may include untreated industrial and/or municipal wastewater, termed herein as "dirty water" or raw water. The present disclosure therefore advantageously provides effective separation of treated water in the permeate, termed herein as "clean water", from the dirty water in the environment around the filter unit. The clean water treated by the disclosed filter module may be designed to meet the relevant norms or standards provided by regulatory bodies, such as ISO 20468 which provides guidelines on performance evaluation of treatment technologies for water reuse systems.

The provision of a pleated filtration membrane increases the active surface without a corresponding increase in overall volume of space occupied by the filter unit and membrane cassette. The pleated structure is advantageously supported by the at least one spacer element. As the filtration membrane may not be rigid, the spacer element advantageously extends across the alternating crests and valleys of the pleats to aid in maintaining the pleat height and pleat spacing.

The filter unit may further comprise a permeate opening in fluid communication with the permeate space for permeate removal, such that fluid flows through the at least one filtration membrane, into the permeate space and out of the permeate opening. A permeate outlet may be sealingly provided at the permeate opening. The permeate opening may provide permeate removal that can advantageously be controlled. As the disclosed permeate opening may be the only opening of the otherwise enclosed permeate space, the disclosed permeate opening may advantageously reduce or eliminate any isolation failure of the permeate space. The sealing provision of the permeate outlet may maintain a permeate space that is sealed off from the dirty water.

In another aspect, there is provided a membrane bioreactor comprising a tank and at least one filter module as disclosed herein provided in the tank.

In yet another aspect, there is provided a use of the filter module as disclosed herein in a membrane bioreactor.

### Brief Description of Drawings

Fig. 1 shows an illustration of two pleated filtration membranes 102, 112 stacked on each other according to an embodiment of the present disclosure.
Fig. 2 shows an illustration of a cross-sectional view of two possible configurations to stack the layers 102, 112. Fig. 2a illustrates the first possible configuration showing alternating crests and valleys of the two layers 102, 112 arranged such that a crest of a layer 112 is aligned to a valley of the other layer 102. Fig. 2b illustrates the second possible configuration showing alternating crests and valleys of the two layers arranged such that a crest of a layer 112 is offset to a valley of the other layer 102.
Fig. 3 shows a graph of filtration surface against varying pleat heights at different pleat angles.
Fig. 4 shows an illustration of one pleated filtration membrane arranged in two layers 102, 112 according to an embodiment of the present disclosure.
Fig. 5 shows an illustration of different configurations of spacer element 118 extending and contacting crests of a layer according to an embodiment of the present disclosure. Fig. 5a illustrates that the spacer element 118 may stretch across a length of the channel. Fig. 5b illustrates that the spacer element 118 may be narrower in width compared to the embodiment in Fig. 5a but disposed diagonally across the channel length. Fig. 5c illustrates that the spacer element 118 may have a comb structure, in which the teeth of the comb extend into the valleys of the pleats.
Fig. 6 shows a perspective view of a filter unit 100 according to an embodiment of the present disclosure.
Fig. 7a shows an isometric view of part of a membrane cartridge 200 according to an embodiment of the present disclosure. Fig. 7b shows a cross-sectional view of membrane cartridge 200 cut along cross-section 210 of the embodiment in Fig. 7a.
Fig. 8a and Fig. 8b show illustrations of filter modules 300 according to different embodiments of the present disclosure.

In the figures, like numerals denote like parts.

### Detailed Description

Hereinafter, exemplary embodiments of the present invention will be described in detail by way of the following examples. The following examples are provided for the purpose of explaining the principles of the invention and its practical application, thereby enabling a person skilled in the art to understand the invention for various exemplary embodiments and with various modifications as are suited to the particular use contemplated. The following examples are not intended to be exhaustive or to limit the invention to the precise embodiments disclosed. The scope of protection is only determined by the appended claims and modifications and equivalents will be apparent to practitioners skilled in this art.

There is provided a filter module comprising: one or more membrane cartridges, each membrane cartridge comprising a plurality of filter units; and a frame structure providing a receiving space to receive the one or more membrane cartridges.

The filter unit may comprise at least one filtration membrane. The filtration membrane may be a flat sheet membrane. The filtration membrane may be made of polymeric material, ceramic or ceramic composite material, or metals or metal alloys. The filtration membrane may comprise a membrane layer, which is the active part of the filtration membrane determining its properties and performance, for example, in terms of pore size and molecular weight cutoff. The filtration membrane may additionally comprise a support membrane to support the membrane layer. The filtration membrane may additionally comprise a structural support to support the membrane layer and/or the support membrane. The membrane layer and/or the support membrane may be polymeric. The membrane layer and/or the support membrane may be made of polyethersulfone, polysulfone, polyacrylonitrile, polyvinylidene fluoride, polyamide, polyetherimide, cellulose acetate, regenerated cellulose, polyolefins, or fluoropolymers. The structural support may be a fibrous material, such as polymer, cellulose, fibreglass, metal, or woven or non-woven fabric made of such materials. The filtration membrane can be produced, for example, by coating the structural support with polymer solution and creating pores in a subsequent phase inversion step or by stretching polymer films in a suitable manner so that the desired pores are created. Many of these filtration membranes are commercially available, e.g., under the name NADIR^{®} Membranes (MANN+HUMMEL Water & Fluid Solutions GmbH, Wiesbaden, Germany) or Celgard^{®} Flat Sheet Membranes (Celgard Inc., Charlotte, NC, USA).

The filtration membrane may be a microfiltration membrane, ultrafiltration membrane or nanofiltration membrane. As the filtration membrane is adapted for use in a membrane bioreactor, selection of a suitable filtration membrane may depend on the environment of the membrane bioreactor that the filter module will be used in. The environment in an operational membrane bioreactor may generally be liquid at operating temperature. The liquid may comprise a carrier fluid, for example water, in which solids suspended in wastewater and microorganisms responsible for the biological degradation of the suspended solids and/or other substances suspended or dissolved in the carrier fluid are present. Depending on the source of wastewater, the suspended or dissolved substances can include various components, for example, oils, fats, alcohols and flavorings, heavy metals, acids and alkalis. Where treatment of high molecular weight substances is required, for example substances of more than 50 kDa, such as proteins, genetic material, microorganisms and/or parts of microorganisms, the filtration membrane selected may be a microfiltration membrane or ultrafiltration membrane. Where treatment of low molecular weight compounds is required, such as certain sugars, the filtration membrane selected may be a nanofiltration membrane. In general, the at least one filtration membrane may have a pore size of 0.1 nm to 10 µm, or 0.1 nm to 1 µm, or 0.1 nm to 100 nm, or 0.1 nm to 5 nm, or 100 nm to 10 µm, or 1 µm to 10 µm.

Thus, the disclosed filtration membranes are unique to the field of membrane bioreactors. The disclosed arrangement of the filtration membrane provides unforeseen advantages to problems faced in the field of membrane bioreactors.

The at least one filtration membrane may be arranged in two layers which are sealed to define an enclosed permeate space therebetween. The two layers of the filtration membrane may be sealed at edges of the layers by a sealing, termed herein as an "edge sealing", in order to provide the enclosed permeate space between the layers. An edge sealing provides effective separation of the permeate in the enclosed permeate space from the raw water. An edge sealing may provide increased surface area for filtration as well as a larger volume of enclosed permeate space. The two layers may be sealed at all edges. As the axial ends of the permeate channels are enclosed, the two layers may be sealed at the remaining edges. The two layers may be sealed at the edges that are parallel to the permeate channels or the axis along the channel length. The edges that are perpendicular to the permeate channels or the axis along the channel length, which are the edges comprising the axial ends of the channels, may be sealed.

The axial ends of the permeate channels may be enclosed or sealed. The axial ends of the channels may be sealed together with the sealing of the two layers. The axial ends of the channels may be sealed with the same sealing as the sealing of the two layers. Sealing of the edges comprising the axial ends may involve sealing of the axial ends. The axial ends of the channels may be sealed when the edges comprising the axial ends are sealed.

The enclosed axial ends and the two sealed layers may cooperate to enclose or seal the permeate space. The two layers and/or the axial ends of the channels may be sealed by a sealing such as sealants, adhesives, bonding, potting material, tape, other types of sealing, or combinations thereof. The sealing may be any suitable one that maintains its sealing capabilities in an aqueous environment, such as the operating environment of a membrane bioreactor. The sealing may comprise plastic, such as an epoxy resin, polyetheretherketone (PEEK), polyurethane or other suitable sealing material. In an embodiment, the two layers and/or the axial ends of the channels may be sealed by a potting material, which is usually prepared by allowing a liquid starting material to cure.

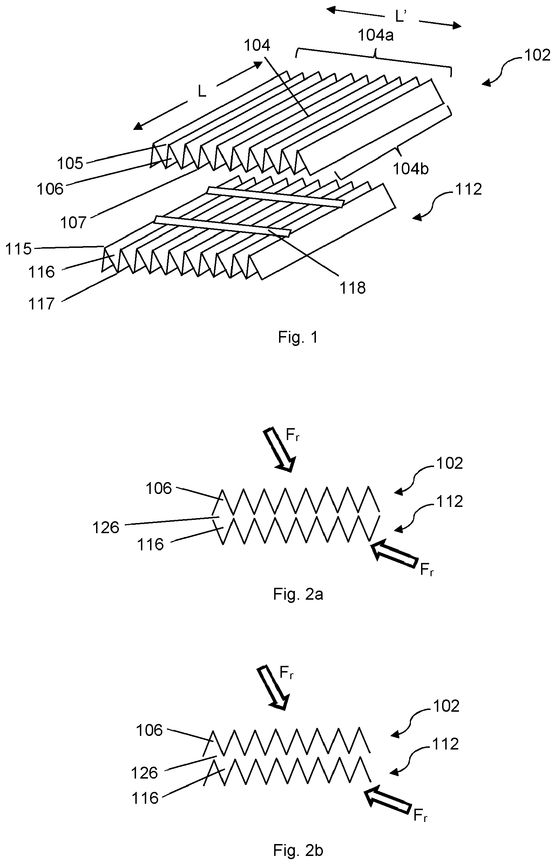

The flat sheet membrane may be pleated to form the alternating crests and valleys. The layer may be generally flat with folds that form the alternating crests and valleys, which are the pleats of the layer. The entire layer may be pleated, meaning that an edge of the layer may be part of a crest or valley. The two valleys and a crest, or two crests and a valley, of a layer may form permeate channels in the permeate space. The layers may be stacked on each other, such that the face of each layer faces each other. The alternating crests and valleys of the two layers may therefore be stacked on each other, as illustrated in Fig. 1. One permeate channel may be defined by the space below the two valleys and a crest of the top layer. Another permeate channel may be defined by the space above the two crests and a valley of the bottom layer. The space between the permeate channels of the top layer and the permeate channels of the bottom layer may be the permeate space. As shown in Fig. 1, the top layer 102 has a face 104 with a length L, being a dimension from an edge of the face to the opposite edge. The length L may not be the longest dimension of the face 104. A space 106 is formed below a crest 105 and its adjacent two valleys 107 of top layer 102. Similarly, a space 116 is formed above a valley 117 and its adjacent two crests 115 of bottom layer 112. The spaces 106 and 116 each define a permeate channel. The permeate channel has length L, along which is a longitudinal axis of the permeate channel. The ends of the axis which are along edge 104a, i.e., the axial ends of the permeate channel, are open in Fig. 1, but are closed or sealed according to the present disclosure. Edge 104a has a dimension L'. Edge 104b runs parallel to the permeate channels or the axis along the channel length and may be sealed by an edge sealing, as disclosed herein. A filter unit may comprise top layer 102 and bottom layer 112 which are attached to each other or sealed to define the enclosed permeate space therebetween.

The alternating crests and valleys of the two layers may be arranged or stacked in any configuration. Any configuration is possible since spacer element(s) are provided to support the pleated structure. Fig. 2 illustrates a cross-sectional view of two possible configurations to stack the layers 102, 112. As shown in Fig. 2a, the alternating crests and valleys of the two layers 102, 112 may be arranged such that a crest of a layer (such as bottom layer 112) is aligned to a valley of the other layer (such as top layer 102). The alternating crests and valleys of each layer may mirror each other, such that a crest of one layer is aligned with a valley of the other layer. In this embodiment, permeate channels 106 and 116 form a large permeate channel, with permeate space 126 in between. The arrangement according to the embodiment in Fig. 2a may allow smoother flow of the permeate in permeate channels 106, 116. Raw water may flow through layers 102, 112, as indicated by arrows Fᵣ, and into permeate space 126. Permeate may flow into neighbouring permeate channels through the permeate space 126 and out of the permeate outlet(s) (not shown). Alternatively, as shown in Fig. 2b, the alternating crests and valleys of the two layers may be arranged such that a crest of a layer (such as bottom layer 112) is offset to a valley of the other layer (such as top layer 102). The crest of a layer may be offset to a valley of the other layer by any suitable distance. The offset may in turn be uniform or may vary arbitrarily from crest to crest, or valley to valley. Similarly, raw water may flow through layers 102, 112, as indicated by arrows Fᵣ, and into permeate space 126. The arrangement according to the embodiment in Fig. 2b may allow for manufacturing tolerances during assembly of the layers, without affecting the flowrate of the permeate. Further, this arrangement may provide easier permeate flow into neighbouring permeate channels, as permeate channel 106 opens into permeate space 126 which in turn opens into permeate channel 116 and into neighbouring channel 106.

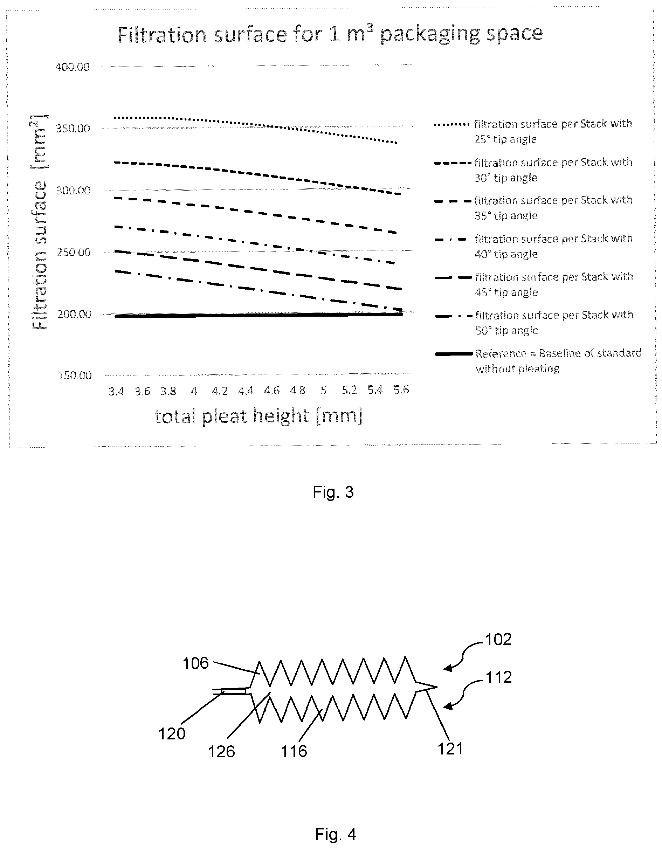

The pleats of the filtration membrane may be folded to have any desired cross-sectional shape. The pleats of the filtration membrane may have a curved cross-section or may be generally sharp. The distance between pleats, or pleat pitch, which is the distance between adjacent crests or adjacent valleys, may be adjusted according to design requirements. The pleat pitch may be uniform or may vary arbitrarily within a layer. In an embodiment, the pleat pitch may be between 0.5 mm to 20 mm, or between 0.5 mm to 10 mm, or between 0.5 mm to 7 mm, or between 1 mm to 20 mm, or between 1 mm to 10 mm, or between 1 mm to 7 mm, or between 2 mm to 20 mm, or between 2 mm to 10 mm, or between 2 mm to 7 mm, or between 2 mm to 6 mm. In some embodiments, the pleat pitch may be dependent on parameters of the pleat and/or the filtration membrane, for example, the height of a pleat, the angle made between two valleys and a crest, and/or the thickness of the filtration membrane. The height of a pleat, or the height of a crest being the normal of the distance from the tip of the crest to the tip of the adjacent valley, may be adjusted according to design requirements. Design requirements may include optimizing the filtration surface. Optimization of the filtration surface may take into account parameters such as the cross-sectional shape of the pleats, the pleat distance and the pleat height. It was found that a generally sharper cross-section, as shown in Figs. 1 and 2, is advantageous. Obtaining a generally sharp cross-section may comprise knife pleating or reducing the radius of a rounded crest. It was found that with a generally sharp cross-section, the angle made between two valleys and a crest may be relaxed to be between 10° and 60° with a pleat height of less than 10 mm. A relaxed angle may allow for manufacturing tolerances during pleating of the filtration membrane. The angle made between two valleys and a crest may be between 10° and 60°, or between 10° and 50°, or between 10° and 40°, or between 10° and 30°, or between 20° and 60°, or between 20° and 50°, or between 20° and 40°. In an embodiment, the angle made between two valleys and a crest may be between 20° and 40°. The pleat height may be less than 10 mm, or less than 8 mm, or less than 6 mm, or 5 mm, or less than 5 mm, or 4 mm, or less than 4 mm. A smaller pleat height may enable the filter unit and consequently a membrane cassette to have a smaller footprint or to occupy smaller volume of space. Fig. 3 shows that the filtration surface is higher than a baseline reference for a stack of filter units occupying a 1 m³ packaging space, when the pleats approach a generally sharper cross-section or have a generally sharp cross-section. Further, the filtration surface of a stack with a lower tip angle, that is, a lower angle made between two valleys and a crest, or a generally sharper cross-section, is higher than that of a stack with a higher tip angle.

The pleated structure of the filtration membrane allows for higher stability of the membrane sheets, as compared to flat sheet solutions, in the presence of the flows of liquid in the operating environment of a membrane bioreactor. The pleated structure also allows a higher packing density of filtration area per volume in a membrane bioreactor.

The two layers of the filtration membrane may each be a pleated filtration membrane. That is, the two layers may be formed by separate filtration membranes, such as is shown in Fig. 1. The filter unit may thus comprise two filtration membranes which are attached to each other or sealed to define the enclosed permeate space therebetween. Alternatively, a single pleated filtration membrane may be bent to define the enclosed permeate space between a first half (such as top layer 102) and a second half (such as bottom layer 112), as shown in Fig. 4. Thus, a filter unit may comprise one filtration membrane bent to define the enclosed permeate space between a top layer 102 and a bottom layer 112, as shown in Fig. 4. The two layers may be formed by a contiguous pleated filtration membrane, the two layers connected by means of a continuous edge fold. In Fig. 4, the permeate space 126 including a plurality of permeate channels 106, 116 is enclosed by a sealing 120 at edges of the single membrane. The pleat 121 that is bent to define the enclosed permeate space between the top layer 102 and the bottom layer 112 may be reinforced by a sealing (not shown), such as sealing 120. The sealing 120 may be one as disclosed herein.

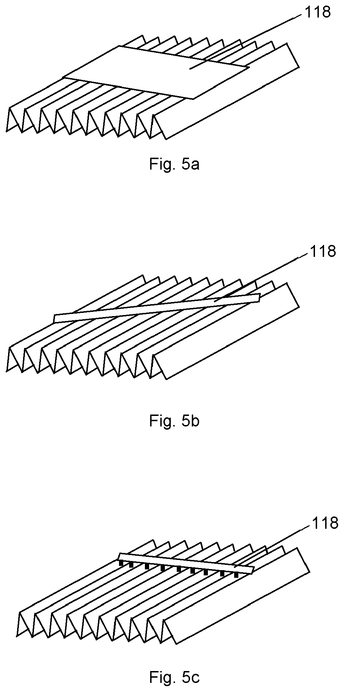

At least one spacer element may be provided on a layer of the filtration membrane, the spacer element extending and contacting at least some of the crests or valleys of the layer, thereby supporting the pleated structure of the layer. The spacer element may be provided in any configuration as long as the spacer element can support the pleats. One spacer element may be provided on a layer or both layers. Where one spacer element is provided, the spacer element 118 may be in the form of a sheet that stretches across a larger length of the channel in order to maintain the pleated structure (as illustrated in Fig. 5a) or may be narrower in width but disposed diagonally across the channel length in order to maintain the pleated structure (as illustrated in Fig. 5b). Alternatively, one spacer element may be provided on a layer and another spacer element may alternately be provided on the other layer.

More than one spacer element may be provided on a layer or both layers. In such embodiment, each spacer element may be of a suitable width and disposed at a suitable distance apart from each other in order to maintain the pleated structure of the layer. Fig. 1 illustrates two spacer elements 118 provided on one layer (bottom layer 112), which extend across the crests 115 of the layer. Each spacer element may be of narrower width, such as in the form of a strip. The strip may have any cross-sectional shape, such as a rectangular or circular cross-sectional shape. The cross-section may be regular or irregular. The strip may be made of a material as disclosed below. The spacer elements may be disposed apart from each other, regularly or uniformly across the length of the channels. A set of spacer elements may be disposed on a layer, while another set of spacer elements may be disposed on the other layer alternately from the first layer. The spacer elements may be arranged parallel to each other. Each spacer element may be disposed perpendicular to the axis along the channel length, or diagonally at an angle between the perpendicular and the axis along the channel length.

Where one or more spacer elements are provided on a layer, the spacer element(s) may be provided on a side of the layer adjacent to the permeate space, such as shown in Fig. 1. In such embodiment, each side of the spacer element(s) may contact the pleat tips of both layers, thereby supporting the pleated structure of both layers. In such embodiment, spacer element(s) need not be provided on both layers to be able to support the pleated structure of both layers.

Where one or more spacer elements are provided on both layers, the spacer element(s) may be provided on a side of the layer adjacent to the permeate space or on a side of the layer adjacent to the dirty water.

Other configurations of spacer elements are envisioned. For example, the spacer element may have a shape complementary to the alternating crests and valleys to thereby support the pleated structure. The spacer element may have a comb structure, in which the teeth of the comb extend into the valleys of the pleats to thereby support the pleated structure, as illustrated in Fig. 5c.

The spacer element extends across at least some crests or valleys of a layer. The spacer element may be secured to tips of the at least some crests or valleys. The spacer element may be secured to tips of the at least some crests or valleys that are contacted by the spacer element. The spacer element may be bonded, glued, welded, such as ultrasonically welded, or otherwise secured to the pleat tips. Where spacer element(s) are provided on a side of a layer adjacent to the permeate space, the spacer element(s) may be secured to both layers. Each side of the spacer element(s) may be secured, e.g. glued, to a corresponding layer, thereby supporting the pleated structure of both layers. In such embodiment, securing means as disclosed herein may be provided on both sides of the spacer element in order to secure a layer on a top side of the spacer element and the other layer on a bottom side of the spacer element.

The spacer element(s) may be provided on a side of the layer adjacent to the permeate space and may be secured to both layers. As the spacer element contacts the pleat tips, permeate flow through the permeate channels may not be impeded by the spacer element. Permeate may flow freely through a permeate channel, pass a spacer element, and into the permeate space around the spacer element and/or the neighbouring permeate channels.

The spacer element disclosed herein, such as in the form of a strip, may be made of any suitable material as long as it can support the pleated structure. The spacer element may be rigid or flexible. The spacer element may be made of a plastic material. The spacer element may comprise a thermoplastic polymer, such as an acrylonitrile butadiene styrene polymer, PEEK or polyurethane, such as a polyurethane hot-melt. The spacer element may comprise a thermosetting polymer, such as epoxy resin. The spacer element may comprise a non-rigid material secured to the pleated structure by a thermoplastic or thermosetting polymer, such as those disclosed above. For example, the strip may comprise a piece of yarn covered in glue or polyurethane hot-melt for securing to the pleated structure.

The filter unit may further comprise a permeate opening in fluid communication with the permeate space for permeate removal, such that fluid flows through the at least one filtration membrane, into the permeate space and out of the permeate opening. A permeate outlet may be sealingly provided at the permeate opening. The permeate opening may be provided on a face of the filtration membrane or an edge of the filtration membrane. Where the opening is provided on a face, the opening and consequently the permeate outlet may be provided on any part of the face of the filtration membrane. More than one permeate opening, and consequently more than one permeate outlet, may be provided to remove the clean water from the enclosed permeate space. The multiple permeate openings or outlets may be provided on different parts of the face of the filtration membrane. Multiple permeate outlets may be provided through one permeate opening. Alternatively, a permeate opening may be provided for each permeate outlet. The permeate opening for the permeate outlet may be provided on one layer of the filtration membrane or on both layers. Where a plurality of filter units is provided, such as for a membrane cartridge, the permeate opening for the permeate outlet may be provided on both layers of the filtration membrane so that the permeate outlets of the plurality of filter units may be fluidly connected to each other. Where permeate openings are provided on both layers, the permeate outlet may comprise a top part connected to the top layer of the filtration membrane and a bottom part connected to the bottom layer of the filtration membrane. The top part and/or the bottom part, or the permeate outlet itself if it is provided on one layer, may extend inwards towards the permeate space, thereby allowing more surface for connection and sealing of the permeate outlet to the filtration membrane. The inward extensions may also provide a guide for the clean water to enter the permeate outlet. Alternatively, the permeate outlet may extend through both layers. In such embodiment, the permeate outlet may comprise opening(s) at a part of the permeate outlet that is within the permeate space, so as to allow the clean water to enter the permeate outlet from the permeate space. The permeate outlet may be a pipe or tube that extends through the permeate openings of the plurality of filter units, thus providing fluid communication of the permeate spaces of the plurality of filter units with the permeate outlet. Such permeate outlet may then be in fluid communication with a central permeate outlet on the frame structure of the filter module.

As the permeate opening for the permeate outlet may contribute to isolation failure of the permeate space, the permeate outlet may be sealingly provided on the filtration membrane or sealingly connected to the opening. The permeate outlet may be sealingly provided or connected to the face of the filtration membrane. The opening in which the permeate outlet is provided may be sealed off. The permeate outlet may be connected to the filtration membrane or the opening by a sealing, termed herein as an "outlet sealing". The outlet sealing may seal any openings made in order to connect the permeate outlet with the filtration membrane, thereby maintaining a permeate space that is sealed off from the dirty water. The outlet sealing may be any suitable one that maintains its sealing capabilities in an aqueous environment, such as the operating environment of a membrane bioreactor. The outlet sealing may comprise sealants, adhesives, bonding, potting material, tape, other types of sealing, or combinations thereof. For example, the outlet sealing may comprise a polyurethane hot-melt. The outlet sealing used may be the same or different as the sealing used to seal the two layers or the axial ends of the channels.

The permeate outlet may be a tube or may be in the form of a permeate tube. The permeate tube may be sealingly provided or connected to one or both layers of the filtration membrane, as disclosed herein. The permeate tube may be connected to the layer(s) by means of the outlet sealing. The sealing used to seal the permeate tube to the filtration membrane may be a sealing as disclosed herein. The sealing may surround the circumference of the permeate tube in order to seal any openings created for provision of the permeate tube.

The permeate outlet may comprise a flange that connects the permeate outlet to the filtration membrane. The flange of the permeate outlet may be sealingly provided or connected to the filtration membrane, by means of the outlet sealing. The sealing used to seal the flange to the filtration membrane may be a sealing as disclosed herein. The flange may have a body with a surface adjacent to the filtration membrane, termed herein as an "adjacent surface". The sealing may fill any space between the flange and the alternating crests and valleys of the layers. The sealing may fill any space between the adjacent surface of the body of the flange and the alternating crests and valleys of the layers. In embodiments, a sealant may be used. The sealant may be a foaming sealant that surrounds the flange and fills any space between the flange, particularly if the flange has a flat adjacent surface, and the alternating crests and valleys of the layers. Alternatively, the flange may have a serrated adjacent surface or may comprise serrations complementary to the alternating crests and valleys of the layers, to thereby provide a fitted connection to the filtration membrane. The flange may be provided on a face of a layer of the filtration membrane adjacent to the raw water. Where openings are provided on both layers of the filtration membrane for the permeate outlet, a flange may be provided on a face of each layer. The permeate outlet may therefore comprise a top flange connected to the top layer of the filtration membrane, or the face of the top layer adjacent to the raw water, and a bottom flange connected to the bottom layer of the filtration membrane, or the face of the bottom layer adjacent to the raw water. The flanges may be provided on the faces of the layers adjacent to the raw water, thereby sandwiching the permeate space between the flanges. The flange may have a diameter or length larger than the opening for the permeate outlet, thereby allowing sufficient connection and sealing to the filtration membrane.

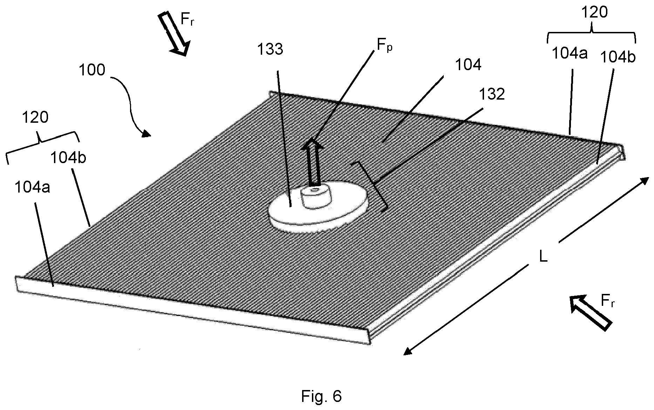

Fig. 6 shows a perspective view of a filter unit 100 according to an embodiment of the present disclosure. Filter unit 100 comprises at least one filtration membrane arranged in two layers stacked on each other, as shown in Fig. 1. The top layer has face 104 and the bottom layer is not shown in Fig. 6. Face 104 is adjacent to the environment around the filter unit 100. The top layer and the bottom layer are sealed to define an enclosed permeate space therebetween. In particular, the top layer and the bottom layer are sealed at all edges 104a, 104b by edge sealing 120, as shown in Fig. 6. The environment around the filter unit 100 may include raw water, when in operation where filter unit 100 is installed in a membrane cartridge which is part of a filter module of a membrane bioreactor. Raw water may flow through the top layer and bottom layer of filter unit 100, as indicated by arrows Fᵣ, and into the enclosed permeate space, forming permeate flow Fₚ. The at least one filtration membrane is pleated to form alternating crests and valleys. Two valleys and a crest, or two crests and a valley, of a layer form permeate channels in the permeate space. The tips of the pleats or crests are indicated as lines on face 104 in Fig. 6. Thus, the lines represent the axes along the lengths of the permeate channels, the permeate channels having a length L. As shown in Fig. 1, upon pleating, the permeate channels are open at the ends of the axis. Therefore, the present disclosure provides that the axial ends of the permeate channels are closed off, in order to enclose the permeate space between the sealed top layer 102 and bottom layer 112. It is shown in Fig. 6 that the edge sealing 120 seals all edges including edges 104a comprising the axial ends of the permeate channels, represented by the ends of the lines on face 104, and edges 104b that are parallel to the permeate channels, that is, the edges that are parallel to the lines. Thus, sealed edges 104a also enclose the axial ends of the permeate channels.

Filter unit 100 comprises a permeate outlet. The permeate outlet comprises a top permeate outlet 132 provided on face 104 of the top layer of the filtration membrane. The top permeate outlet 132 comprises a flange 133. An outlet sealing, as disclosed herein, surrounds the circumference of the flange 133 in order to seal any openings created for provision of the permeate outlet. Although not shown in Fig. 6, the permeate outlet comprises a bottom permeate outlet provided on a face of the bottom layer opposite face 104, which is also adjacent to the environment around the filter unit 100. The bottom permeate outlet also comprises a flange. The bottom permeate outlet is complementary to top permeate outlet 132, so as to sandwich the permeate space therebetween. As the permeate space is enclosed by edge sealing 120 and the outlet sealing, the permeate in the permeate space flows out of the permeate space, as indicated by arrow Fₚ, via permeate outlet 132. Since the top layer and bottom layer of the filter unit 100 are filtration membrane(s), due to pressure difference and/or concentration difference between the environment (raw side) and the permeate space (clean side), the permeate is prevented from flowing back through the top layer and bottom layer of the filter unit 100. A plurality of filter units 100 may be stacked together, such that the permeate outlets of the plurality of filter units 100 are aligned and in fluid communication with each other.

In some embodiments, the permeate opening for removing clean water from the enclosed permeate space may be provided on an edge of the filtration membrane, termed herein as "edge opening". A permeate outlet may be provided at the permeate opening, as disclosed above. As the edge of the filtration membrane may not have much surface area for secure connection of a permeate outlet, the permeate outlet may be in the form of a tube. The permeate flowrate out of the permeate space may however be too small since the edge of the filtration membrane provides only a small area for permeate removal. Hence, as an alternative, the edge opening may be provided on an edge portion that is sealed in a header of the membrane cartridge.

The membrane cartridge comprises a plurality of filter units as disclosed herein. The membrane cartridge may comprise a header to hold the plurality of filter units. In the context of the present disclosure, a "header" refers to a holder in which terminal end portions of the filter units are secured. Thus, the header may comprise separate portions to secure the terminal end portions of the filter units. A plurality of filter units may be assembled together in the membrane cartridge. The plurality of filter units may be stacked on each other, such that the face of each filter unit faces each other. Opposing edge portions of the filter units may be held in a header. An edge portion may comprise an edge of a filter unit and some length of the filtration membrane. In order to secure the filter units in the header, the edge portions of the filter units may be sealed in the header. The header may comprise a sealing, such as one disclosed herein. In embodiments, the sealing may be a potting material.

The edge portions sealed in the header may be the edges parallel to the permeate channels. While both opposing edge portions of the filtration membranes may be sealed in the header, either one or both of the edges may be opened or may comprise the edge opening for permeate removal. Opening an edge that is parallel to the permeate channels may provide a more controlled removal of permeate, as opposed to opening an edge comprising the axial ends of the permeate channels which exposes relatively more of the permeate channel due to the axial ends. Therefore, in embodiments, the edge portions of the filtration membranes that are parallel to the permeate channels are sealed in the header. Having the edge portions of the filter units sealed in the header aids in sealing off the dirty water from the permeate space when the edge opening for removal of permeate is provided. The edge opening may therefore be sealingly provided on an edge of the filtration membrane by means of the sealed header. In this embodiment, once sealed in the header, the edges parallel to the permeate channels that were sealed may be removed or cut open to expose the permeate space and to provide the edge opening for permeate removal. The edge opening may lead directly to a permeate collection space of the header. The header may comprise a permeate collection space, which is in fluid communication with the edge opening or the cut edges of the filter units. The permeate collection space of the header may be sealed off from the dirty water in the environment of the membrane bioreactor due to the sealed header. The header may comprise a permeate outlet, which is fluidly connected to the permeate collection space. Thus, as an alternative to providing a permeate outlet at the edge of the filtration membrane, the edge openings of a plurality of filter units may be fluidly connected to the permeate outlet of the header. The permeate outlet of the header may in turn be fluidly connected to a central permeate outlet on the frame structure of the filter module.

The membrane cartridge, also known as membrane cassette, may comprise any number of filter units. Typically, a membrane cartridge may comprise more than 10, or more than 15, or more than 20, or more than 25, or more than 50, or more than 100 filter units.

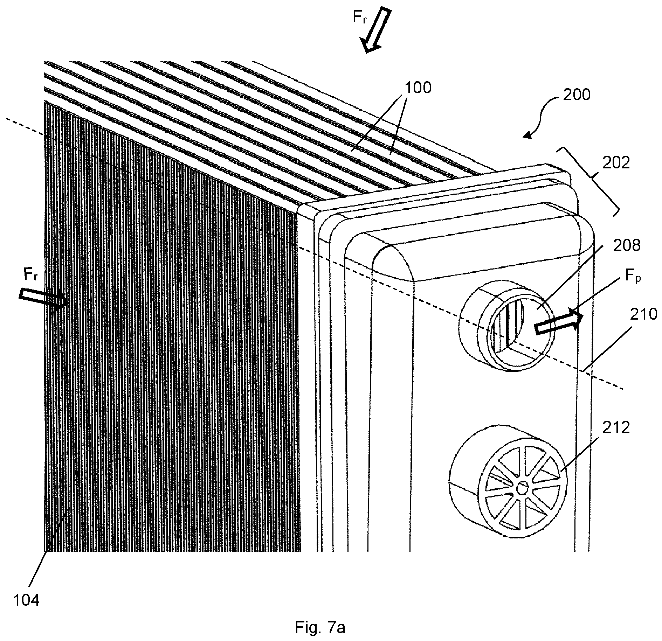

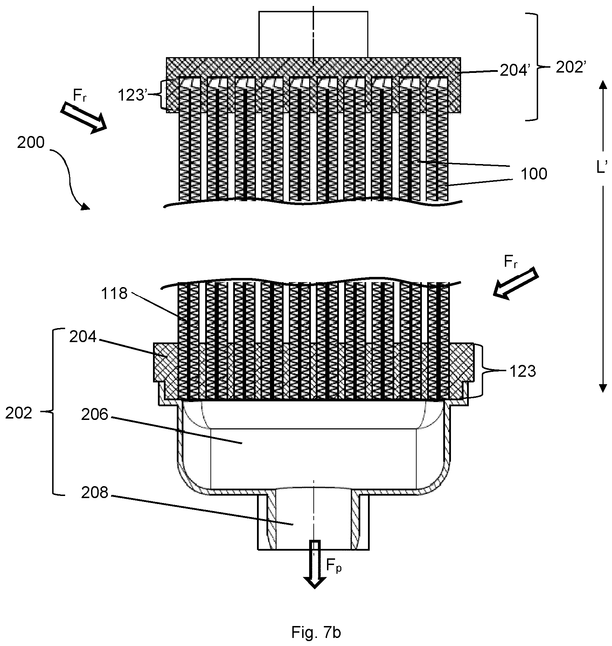

Figs. 7a and 7b show an isometric view and a cross-sectional view, respectively, of a membrane cartridge 200 according to an embodiment of the present disclosure. Specifically, the cross-sectional view of Fig. 7b is obtained by cross-sectioning membrane cartridge 200 along cross-section 210 shown in Fig. 7a. In Fig. 7a, face 104 of a filter unit 100 can be seen, in which the tips of the pleats or crests are indicated as lines on face 104, the lines representing the axes along the lengths of the permeate channels. As shown more clearly in Fig. 7b, membrane cartridge 200 comprises a plurality of filter units 100, wherein edge portions 123, 123' of the plurality of filter units 100 are sealed by sealing 204, 204' in header 202, 202'. Header 202, 202' secures the terminal ends, or edge portions 123, 123', of the filter units 100 in position, so as to minimize movement of filter units 100 by the flow of wastewater around the filter units 100. As can be seen from Fig. 7b, the cross-section is cut along cross-section 210, which is parallel to the edges comprising the axial ends of the permeate channels, that is, the edges that are perpendicular to the permeate channels. It is evident from Figs. 7a and 7b that the edges or edge portions which are parallel to the permeate channels (edge portions 123, 123') are sealed in the header 202, 202'. The length of the permeate channels, which is represented by length L of side 104b in Fig. 1, is neither shown in Fig. 7a since only part of the membrane cartridge 200 is illustrated therein, nor in Fig. 7b since length L runs into the paper. The length L' in Fig. 7b represents the length of sides 104a in Fig. 1. The longer the length L', the higher the number of pleats present on filter unit 100. The filter units 100 in Fig. 7b are truncated, thus the full length of L' is not illustrated. A spacer element 118 for each filter unit 100 is shown in Fig. 7b, which supports the pleated structure. There may or may not be other spacer elements 118 (not shown) along length L.

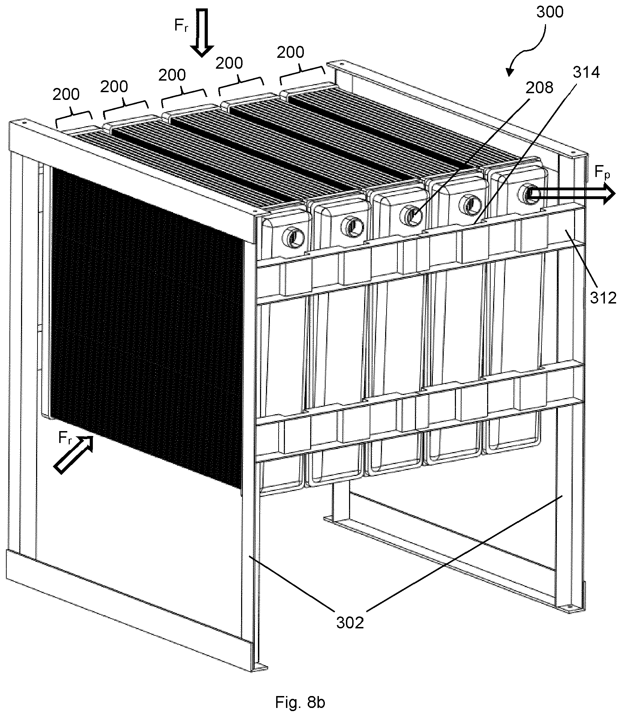

Edge portion 123' of the filter units 100 is sealed with edge sealing 120, not shown in Fig. 7b. Header 202' comprises sealing 204' that surrounds edge portion 123' radially and axially. Prior to assembly into header 202 of membrane cartridge 200, edge portion 123 of the filter units 100 is sealed with edge sealing 120, not shown in Fig. 7b. Edge sealing 120 may aid in preventing the curable, hardenable sealing 204 from entering into the permeate space during assembly. After sealing 204 is applied to edge portion 123 and has hardened, part of the sealing 204 including edge sealing 120 is cut off, in order to provide an edge opening to expose the permeate space at edge portion 123 for permeate removal. As can be seen in Fig. 7b, sealing 204 only surrounds edge portion 123 radially, since the axial ends of edge portion 123 have been cut off. Header 202 comprises a permeate collection space 206 which is in fluid communication with the edge opening or the cut edge portion 123 of the filter units 100. The permeate in the permeate space and the permeate collection space 206 remains separated from the dirty water in the environment of the membrane bioreactor due to sealing 204. Thus, effective separation of the clean water from the dirty water is maintained. The dirty or raw water in the environment may flow through the faces of the filtration membrane(s) of the filter units 100, as indicated by arrows Fᵣ, into the enclosed permeate space of each filter unit 100, forming permeate flow Fₚ, and into the permeate collection space 206. The permeate collection space 206 of header 202 leads to an outlet 208 (also shown in Fig. 7a), which is fluidly connected to a central permeate outlet of a filter module. Thus, the permeate flow Fₚ exits permeate collection space 206 via outlet 208 and into the central permeate outlet of the filter module. As only edge portion 123 comprises the edge opening, header 202 is designed differently from header 202', although the header 202, 202' works together to hold edge portions 123, 123', and ultimately filter units 100. When assembled into a filter module, membrane cartridge 200 may be positioned in the orientation illustrated in Fig. 7a and more clearly shown in Fig. 8b. Where membrane cartridge 200 comprises a header 202, 202' having edge portions 123, 123' at edges of the filter units that are parallel to the permeate channels sealed in the header 202, 202', a permeate opening is provided on one of the edge portions 123 of each filter unit 100. The header 202 comprising edge portions 123 in which the permeate openings of filter units 100 are provided comprises a permeate outlet 208 to draw off permeate from the permeate openings. The permeate outlet 208 may be positioned at the sides of the filter module that are perpendicular to the surface on which the filter module is placed. In other words, the edges of the filter units that are parallel to the permeate channels may be positioned perpendicular to the surface on which the filter module is placed. Membrane cartridges 200 may therefore be stacked on top of each other, without affecting the permeate outlets positioned at the sides.

Thus, in embodiments where an edge opening is provided for removing clean water from the permeate space, at least one edge portion of the filtration membranes of the plurality of filter units that is sealed in a header may comprise the edge opening. The header may comprise a permeate collection space which is in fluid communication with the edge opening and therefore the permeate space. The header may comprise an outlet to remove the permeate from the permeate collection space. The outlet of the header may be connected to or in fluid communication with a permeate outlet on a frame structure of a filter module. The permeate outlet on the frame structure may be termed a central permeate outlet.

In embodiments where the permeate opening is provided on a face of the filtration membrane, the permeate outlets provided at the permeate openings of the plurality of filter units may be aligned with each other. The permeate outlet provided at the permeate opening of a filter unit may be in fluid communication with corresponding permeate outlets of the other filter units. The permeate outlets of the plurality of filter units may be in fluid communication with each other and a central permeate outlet on the frame structure of the filter module. In such embodiments, the edge portions of the filter units sealed in the header may not comprise any edge opening. The sealing of the header may surround the edge portions radially and axially, to simply securely hold the edge portions of the filter units in the header. The header may simply secure the filter units in position. Alternatively, in embodiments where the permeate opening is provided on a face of the filtration membrane, the membrane cartridge may not require a header since the permeate outlets of the filter units may be in fluid communication with each other. The membrane cartridge(s), particularly the filter units, may be mounted or otherwise received directly in the receiving space of the frame structure, without the header. In such embodiments, the membrane cartridge may not comprise a header.

The filter module comprises one or more membrane cartridges as disclosed herein and a frame structure providing a receiving space to receive the one or more membrane cartridges. One or more than one membrane cartridge may be included in the filter module, depending on the volume of wastewater to be treated.

The filter module may further comprise an aerator connected to the frame structure and configured to aerate the one or more membrane cartridges. As the active surface area of the filtration membranes may easily be obstructed by the particulates and chemical contaminants in the wastewater, the aerator provides aeration in the form of air bubbles to mechanically dislodge any obstruction on the membrane surface and/or cause the filtration membranes to shake the obstructions off the surface.

The filter module may be provided in a wastewater tank of a membrane bioreactor. The wastewater tank may contain wastewater and microorganisms responsible for biological degradation of solids suspended in the wastewater. The frame structure of the filter module provides the membrane cartridge(s) with a mounting or support in the wastewater tank. There is therefore provided a membrane bioreactor comprising a tank and at least one filter module as disclosed herein provided in the tank.

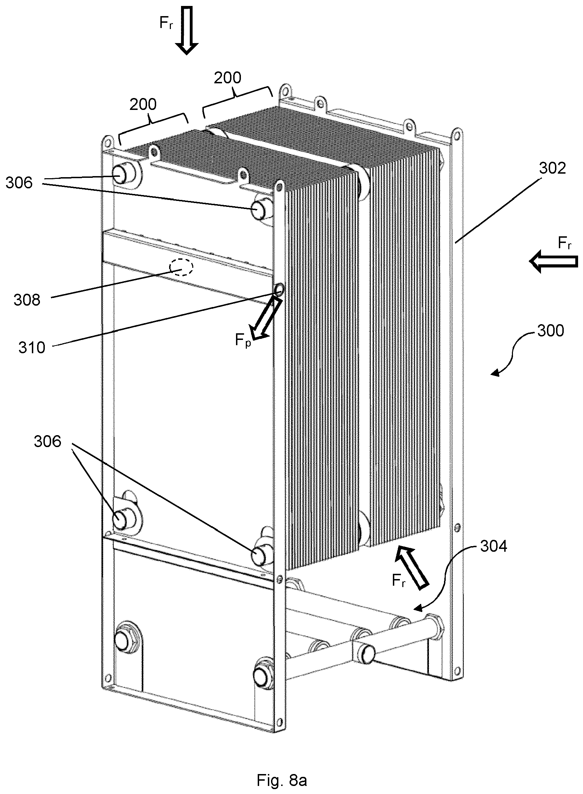

Fig. 8a shows an illustration of a filter module 300 according to an embodiment of the present disclosure. Filter module 300 comprises two membrane cartridges 200; frame structure 302; and aerator 304 connected to frame structure 302. Membrane cartridges 200 are received in a receiving space of frame structure 302. Specifically, membrane cartridges 200 are mounted on railings 306. Aerator 304 may comprise one or more tubes configured to supply air to a plurality of aerator tubes positioned below the membrane cartridges 200. Each membrane cartridge 200 comprises a plurality of filter units, such as a filter unit shown in Fig. 6. The filter unit, such as filter unit 100 of Fig. 6, may comprise through holes (not shown in the figures) for mounting in the receiving space of frame structure 302. The through holes of the filter unit may be positioned so as to mount the filter unit on railings 306. The through holes of the filter unit may be provided on the face of the filtration membranes, aligned at the position where railings 306 are located. In Fig. 8a, the permeate outlets (not shown) of the filter units of membrane cartridges 200 are provided on the face of the filtration membranes and aligned at position 308 on the frame structure 302. In the embodiment of Fig. 8a, the membrane cartridges 200 do not comprise a header. Position 308 is enclosed by a passage that leads to central permeate outlet 310 on the frame structure 302.

Fig. 8b shows an illustration of a filter module 300 according to another embodiment of the present disclosure. Filter module 300 comprises five membrane cartridges 200, such as a membrane cartridge shown in Figs. 7a and 7b; and frame structure 302. Membrane cartridges 200 are received in a receiving space of frame structure 302. Specifically, with reference to Fig. 7a, projection 212 of each cartridge 200 couples with a corresponding recessed catch 314 in latch bar 312. Latch bar 312 thus couples the five membrane cartridges 200 thereto. Latch bar 312 is connected to frame structure 302 by means of any suitable connection, e.g., slots, latches, welding, etc. One or more than one latch bar may be provided to mount the membrane cartridges onto the frame structure. The latch bar(s) may be provided on one side of the membrane cartridges or on opposing sides of the membrane cartridges. The outlet 208 of the header of each membrane cartridge 200 is shown as open in Fig. 8b. Permeate may be drawn off from the outlets 208 in any suitable way. For example, permeate may be drawn off by means of a permeate tube connected to each permeate outlet 208. In another example, the outlets 208 may be connected to a central header connected to the frame structure, e.g., a passage welded to the frame structure, and permeate is drawn off from a central permeate outlet on the central header.

The filter module, such as filter module 300 of Fig. 8a or Fig. 8b, may be provided in a tank, such as a purification tank of a membrane bioreactor of a wastewater treatment plant. The tank may contain raw water received from industrial plants and/or municipalities. The tank may contain raw water received from upstream processes of the wastewater treatment plant. The raw water may surround filter module 300, as shown by arrows Fᵣ. The raw water may flow through the faces of the filtration membrane(s) of each filter unit of cartridge 200, as indicated by arrows Fᵣ, into the enclosed permeate space of each filter unit, forming permeate flow Fₚ, exiting outlets 208, and eventually out of, e.g., central permeate outlet 310. The permeate in Fₚ may be further purified or safely discharged, e.g., into the sea.

During operation of the filter module or the membrane bioreactor, the filter units may be subjected to a relative negative pressure so that the clean water can be drawn off from the permeate space. The relative negative pressure may be applied through the central permeate outlet, which is in fluid communication with the permeate outlets of the filter units or the permeate outlet of the header, which are or is in turn in fluid communication with the permeate space. Therefore, fluid may flow through the filtration membrane, leaving contaminants upstream of the filtration membrane or on a side of the filtration membrane adjacent to the environment of the membrane bioreactor, such as side 104 in the figures. Clean water may be obtained downstream of the filtration membrane, that is, on a side of the filtration membrane adjacent to the permeate space, and may be drawn out of the permeate space through the central permeate outlet.

A method of producing the filter module is provided. The method may comprise providing at least one filtration membrane. The filtration membrane may be one as disclosed herein. The filtration membrane may be a flat sheet membrane. The method may comprise pleating the flat sheet membrane to form alternating crests and valleys. The alternating crests and valleys may have a cross-sectional shape and/or dimensions as disclosed herein. Alternatively, the method may comprise providing at least one filtration membrane, the filtration membrane(s) having alternating crests and valleys of the desired cross-sectional shape and/or dimensions. Where one filtration membrane is provided, the method may comprise bending the filtration membrane to form the two layers disclosed herein. The filtration membrane may be bent along an axis parallel to the permeate channels. The bending may comprise bending a pleat, wherein the bent pleat forms an edge of the layers. The bend may comprise a continuous edge fold or a bent pleat. Where two filtration membranes are provided, the method may comprise arranging the filtration membranes in two layers as disclosed herein. The method may comprise arranging the layers into a configuration as disclosed herein. For example, the alternating crests and valleys of the two layers may be arranged such that a crest of a layer is aligned to a valley of the other layer. In another example, the alternating crests and valleys of the two layers may be arranged such that a crest of a layer is offset to a valley of the other layer.

The method may comprise providing at least one spacer element on a layer of the filtration membrane. The at least one spacer element may be provided to extend across the crests or valleys of the layer and contact at least some of the crests or valleys of the layer, thereby supporting the pleated structure of the layer. One or more than one spacer element may be provided on one or both layers of the filtration membrane, as disclosed herein. The spacer element may have a configuration as disclosed herein. The method may comprise securing the at least one spacer element on the layer, with securing means as disclosed herein. Where spacer element(s) are provided on a side of a layer adjacent to the permeate space, the spacer element(s) may be secured to both layers. Each side of the spacer element(s) may be secured, e.g. glued, to a corresponding layer, thereby supporting the pleated structure of both layers. In such embodiment, securing means as disclosed herein may be provided on both sides of the spacer element in order to secure a layer on a top side of the spacer element and the other layer on a bottom side of the spacer element.

The method may comprise sealing the two layers to define an enclosed permeate space between the two layers. The layers may be sealed at its edges by an edge sealing. The method may comprise enclosing or sealing both the axial ends of the permeate channels. The step of sealing the two layers may comprise the step of sealing the axial ends of the permeate channels, as disclosed herein. The sealing used may be as disclosed herein.

The method may comprise providing a permeate opening in fluid communication with the permeate space for permeate removal, such that fluid flows through the at least one filtration membrane, into the permeate space and out of the permeate opening. The permeate opening may be provided at a location as disclosed herein. The method may comprise sealingly providing a permeate outlet at the permeate opening. The sealing used may be as disclosed herein. The permeate outlet may have a configuration as disclosed herein.

The method may comprise sealing edge portions of the filtration membrane(s) of a plurality of filter units in a header to provide a membrane cartridge. The sealing used and the header may be as disclosed herein. The method may comprise providing a permeate opening at one of the edge portions. The provision of a permeate opening at one of the edge portions may comprise removing the header sealing and the layer sealing at the edge portion to expose the permeate space to a permeate outlet of the header, the permeate outlet of the header being sealed off from the environment due to the sealing of the header.

The method may comprise providing a frame structure having a receiving space to receive one or more membrane cartridges. The method may comprise providing a frame structure having a receiving space to receive one or more membrane cartridges and an aerator connected to the frame structure, the aerator configured to aerate the one or more membrane cartridges. The frame structure may comprise a central permeate outlet that is fluidly connected to the permeate outlets of the filter units or the header. The method may comprise mounting one or more membrane cartridges to the frame structure in order to produce the filter module. The mounting may comprise connecting the permeate outlets of the filter units or the header to the central permeate outlet of the frame structure.

The method may comprise providing the produced filter module in a tank of a membrane bioreactor. A method of using the produced filter module or the filter module disclosed herein in a membrane bioreactor is also provided.

## Claims

1. A filter module comprising:
one or more membrane cartridges, each membrane cartridge comprising a plurality of filter units,
each filter unit comprising at least one filtration membrane adapted for use in a membrane bioreactor, the at least one filtration membrane being a microfiltration membrane, ultrafiltration membrane or nanofiltration membrane,
wherein the at least one filtration membrane is pleated to form alternating crests and valleys, and is arranged in two layers which are sealed to define an enclosed permeate space therebetween,
wherein two valleys and a crest, or two crests and a valley, of a layer form permeate channels in the permeate space, the permeate channels having an axis along the channel length, the permeate channels being enclosed at both axial ends of the channels, the enclosed axial ends and the two sealed layers enclosing the permeate space,
wherein at least one spacer element is provided on a layer of the filtration membrane, the spacer element extending and contacting at least some of the crests or valleys of the layer, thereby supporting the pleated structure of the layer; and
a frame structure providing a receiving space to receive the one or more membrane cartridges.

2. The filter module of claim 1, wherein the two layers of the filtration membrane are sealed at edges of the layers by an edge sealing.

3. The filter module of claim 1 or 2, wherein the alternating crests and valleys of each layer mirror each other, such that a crest of one layer is aligned with a valley of the other layer, or wherein the alternating crests and valleys of the two layers are arranged such that a crest of one layer is offset to a valley of the other layer.

4. The filter module of any preceding claim, wherein the crests and valleys are generally sharp, the angle made between two valleys and a crest is between 10° and 60°, and the height of a crest is less than 10 mm.

5. The filter module of any preceding claim, wherein the spacer element is in the form of a strip and a plurality of spacer elements are provided on a layer.

6. The filter module of any preceding claim, wherein the spacer element is secured to tips of the at least some crests or valleys of a layer.

7. The filter module of any preceding claim, wherein the spacer element is provided on a side of the layer adjacent to the permeate space and is secured to both layers, such that fluid flows around the spacer element in the permeate space.

8. The filter module of any preceding claim, wherein the two layers are formed by separate filtration membranes or by a single filtration membrane bent to define the enclosed permeate space between a first half and a second half of the single filtration membrane.

9. The filter module of any preceding claim, wherein each membrane cartridge comprises a header to hold the plurality of filter units, wherein edge portions of the at least one filtration membrane of the plurality of filter units are sealed in the header, and wherein the edge portions are at edges of the at least one filtration membrane that are parallel to the permeate channels.

10. The filter module of any preceding claim, wherein each filter unit further comprises a permeate opening in fluid communication with the permeate space for permeate removal, such that fluid flows through the at least one filtration membrane, into the permeate space and out of the permeate opening, and wherein a permeate outlet is sealingly provided at the permeate opening.

11. The filter module of claim 10, wherein the permeate opening is provided on a face of the filtration membrane, and the permeate outlet provided at the permeate opening of a filter unit is arranged to be in fluid communication with corresponding permeate outlets of the other filter units and a central permeate outlet on the frame structure.

12. The filter module of claim 11, wherein the permeate outlet comprises a flange that connects the permeate outlet to the filtration membrane.

13. The filter module of claim 12, wherein a sealing fills any space between the flange and the alternating crests and valleys of the layers, and wherein the flange optionally comprises serrations complementary to the alternating crests and valleys of both layers.

14. The filter module of claims 9 and 10, wherein the permeate opening is provided on one of the edge portions, and the permeate outlet provided at the permeate opening is comprised in the header and is in fluid communication with a central permeate outlet on the frame structure.

15. The filter module of any preceding claim, further comprising an aerator connected to the frame structure and configured to aerate the one or more membrane cartridges.

16. A membrane bioreactor comprising a tank and at least one filter module as claimed in any preceding claim provided in the tank.

17. Use of the filter module as claimed in any one of claims 1-15 in a membrane bioreactor.
